# EUROPÄISCHE PATENTANMELDUNG

(11) **EP 2 085 446 A1**
(43) Veröffentlichungstag der Anmeldung: **05.08.2009**
(21) Anmeldenummer: 09150193.2
(22) Anmeldetag: 08.01.2009
(51) Int. Cl.: C09J 7/02, B32B 27/32

(54) **Liner sowie die Verwendung desselben**

(30) Priorität: 22.01.2008 DE 102008005566
(71) Anmelder: TESA SE, 20253 Hamburg (DE)
(72) Erfinder: Michel, Uwe, 10317 Berlin (DE); Müssig, Dr. Bernhard, 21218 Seevetal (DE); Wieck, Andreas, 25469 Halstenbek (DE)
(74) Vertreter: Stubbe, Andreas

(57) **Zusammenfassung**

Liner aus einer monoaxial verstreckten Folie, die aus mindestens zwei miteinander coextrudierten Schichten besteht, einer Kernschicht aus Polypropylen, einer Coextrusionsschicht sowie gegebenenfalls weiteren Schichten, wobei auf der außen liegenden Seite der Coextrusionsschicht eine Releasebeschichtung aufgebracht ist.

## Beschreibung

Die Erfindung betrifft einen Liner sowie die Verwendung desselben.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln auf ein Abdeckmaterial aufgebracht, das zusammen mit dem Klebeband aufgewickelt wird. Dem Fachmann sind derartige Abdeckmaterialien unter den Namen Liner bekannt. Neben der Abdeckung von ein- oder doppelseitig klebenden Klebebändern werden Liner auch zur Eindeckung von Etiketten eingesetzt.

In der Regel handelt es sich bei Linern um Trennpapiere (Papiere mit ein- oder beidseitiger Silikonbeschichtung). In geringem Umfang werden auch Polyester-, Polypropylen- und Polyethylenfolien mit Silikonbeschichtung eingesetzt. Liner auf Folienbasis werden von dem Fachmann für selbstklebende Produkte als Trennfolien bezeichnet.
Die Folien für solche Liner aus Polyolefin werden durch Blas- oder Flachfolienextrusion hergestellt. Liner dienen dem Herstellprozess (Beschichtung von Haftklebstoff, Trocknung, Übertragung des trockenen Klebstoffs auf ein Substrat und Entfernung des Liners). Der Liner kann auch zur Lagerung (zum Beispiel bei doppelseitigen Klebebändern) dienen. Der Liner deckt die Haftklebstoffschicht ab und wird vor dem Verkleben in der Applikation entfernt.
Für viele Anwendungen im Bereich der Weiterverarbeitung (so genannte Converting-Anwendungen), wie zum Beispiel die Herstellung von Stanzlingen, können keine Trennpapiere eingesetzt werden, weil sie sich bei Feuchtigkeitsschwankungen nicht dimensionsstabil verhalten und weiterhin die Dickentoleranzen oft zu hoch sind. Weiterhin haften nach dem Stanzvorgang an den Schneidkanten des Klebebandes aus dem Trennpaper stammende Papierfasern, was für Hygiene- und Elektronikanwendungen des Stanzlings, zum Beispiele Stanzlinge zur Montage von Flachbildschirmen oder Mobiltelefonen, nicht akzeptabel ist.
Für solche Anwendungen werden heutzutage 50 oder 75 µm dicke silikonisierte Polyesterfolien eingesetzt. Sie weisen die genannten Nachteile der Trennpapiere zwar nicht auf, sind jedoch relativ teuer und praktisch nur in farblos erhältlich.
Farbig transparente Liner können aber für die Beobachtung in der Maschine hilfreich sein. Farbige Liner begünstigen die Steuerung des Stanzvorganges (zum Beispiel die Bahnkantensteuerung). Farbige Polyesterfolien sind allerdings extrem teuer, daher wird versucht, die Farbe über einen Beschichtungsprozess aufzubringen (siehe EP 1 234 863 A1).

Aufgabe der Erfindung ist es, einen Liner zur Verfügung zu stellen, der die genannten Nachteile von Trennpapieren oder Polyestertrennfolien nicht aufweist.

Gelöst wird diese Aufgabe durch einen Liner, wie er im Hauptanspruch näher gekennzeichnet ist. In den Unteransprüchen sind vorteilhafte Ausführungsformen der Erfindung beschrieben. Des Weiteren ist die Verwendung des erfindungsgemäßen Liners vom Erfindungsgedanken umfasst.

Demgemäß betrifft die Erfindung einen Liner aus einer monoaxial verstreckten Folie, die aus mindestens zwei miteinander coextrudierten Schichten besteht, einer Kernschicht aus Polypropylen, einer Coextrusionsschicht sowie gegebenenfalls weiteren Schichten, wobei auf der außen liegenden Seite der Coextrusionsschicht eine Releasebeschichtung aufgebracht ist.

Zur Einstellung ausreichend hoher Spannungen bei 1 %- und 10 %-Dehnung, aber auch zu Einstellung einer nicht zu hohen Biegesteifigkeit oder Sprödigkeit wird das Reckverhältnis der Folie des Liners auf den jeweiligen Polypropylen-Rohstoff abgestimmt. Ein Reckverhältnis von zum Beispiel 1:6 gibt an, dass aus einem Abschnitt der Primärfolie von 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet. Bei dieser Erfindung liegt das Reckverhältnis der Folie vorzugsweise zwischen 1:5 und 1:10, insbesondere zwischen 1:6 und 1:9.

In einer bevorzugten Ausführung besitzt die Folie in Längsrichtung (Maschinenrichtung) eine spezifische Zugkraft bei 1 %-Dehnung von mindestens 15, vorzugsweise mindestens 20 N/cm und/oder eine spezifische Zugkraft bei 10 %-Dehnung von mindestens 100, vorzugsweise mindestens 130 N/cm.

Die spezifische maximale Zugkraft beträgt gemäß einer weiteren vorteilhaften Ausführungsform der Erfindung mindestens 170, vorzugsweise mindestens 190 N/cm und/oder der Weiterreißwiderstand in Querrichtung mindestens 200, insbesondere mindestens 400 N/mm.
Zur Berechnung von Festigkeitswerten werden die spezifischen Kraftwerte durch die Dicke des Liners geteilt. Die Dicke des Liners liegt vorzugsweise in einem Bereich von 30 bis 120 µm, bevorzugt 40 bis 100 µm, besonders bevorzugt 50 bis 75 µm. Weiter vorzugsweise liegt die im Bereich von 45 bis 55 oder von 70 bis 80 µm, damit die Stanzmaschinen beim Wechsel von Produkten auf üblicherweise heute eingesetzten 50 oder 75 µm-Polyesterlinern nicht neu eingestellt werden müssen.

Gemäß einer weiteren vorteilhaften Ausführungsform ist auf beiden außen liegenden Seiten des Trägers je eine Releasebeschichtung aufgebracht, wobei die Releasebeschichtungen vorzugsweise unterschiedliche Trennkräfte zu einer Klebstoffschicht aufweisen.

Die Folie für den erfindungsgemäßen Liner kann analog dem relativ einfachen Extrusionsverfahren für monoaxial verstreckte Polypropylen-Folien hergestellt werden. Solche Folien werden als Trägermaterial für Aufreißstreifen oder Strapping Tapes eingesetzt. Diese Trägerfolien werden einseitig mit einem Haftklebstoff, vorzugsweise unter Verwendung eines Primers, beschichtet.
Ein Liner hingegen ist nicht Bestandteil eines Klebebandes oder Etiketts, sondern nur ein Hilfsmittel für deren Herstellung, Lagerung oder für die Weiterverarbeitung durch Stanzen. Darüber hinaus wird ein Liner im Gegensatz zu einem Träger nicht fest mit einer Klebstoffschicht verbunden.

Geeignete PP-Folienrohstoffe für die Kernschicht des erfindungsgemäßen Liners sind kommerziell erhältliche Polypropylenhomopolymere oder Polypropylencopolymere. Vorzugsweise werden für den erfindungsgemäßen Gegenstand schlagzähmodifizierte Polypropylencopolymere mit Ethylen oder Butylen als Comonomer verwendet.
Die Schmelzindizes der genannten Polymere müssen im für Flachfolienextrusion geeigneten Bereich liegen. Dieser Bereich sollte zwischen 0,3 und 15 g/10min, vorzugsweise im Bereich von 0,8 und 5 g/10min (gemessen bei 230 °C/2,16kg) liegen.

Der Biegemodul des Polypropylens liegt vorzugsweise im Bereich von 1000 bis 1600, insbesondere im Bereich von 1200 bis 1400 MPa.

Die Polypropylenfolie der Kernschicht kann weitere Polymere enthalten, zum Beispiel Polyethylen einschließlich Ethylencopolymere wie EVA oder LLDPE oder nicht bereits genannte Propylenpolymere.

Weiterhin können weitere für Polypropylen übliche Additive verwendet werden, zum Beispiel Farbstoffe, Pigmente, Füllstoffe, Antioxidantien, Lichtschutzmittel, Nucleierungsmittel oder Verarbeitungshilfsmittel. Bevorzugt beeinflussen diese nicht die Aushärtung einer Silikonschicht negativ.

Die Folie der Kernschicht ist vorzugsweise farbig oder weiß.

Beim Stanzen von mit Trennfolien eingedeckten Klebebändern kann es durch eine falsche Einstellung der Maschine oder durch zu hohe Dickentoleranzen des Liners zum Anstanzen der Folie des Liners kommen. Beim Spenden des Stanzlings kann dies zum Ausriss von Teilen der Polypropylen-Folie des Liners oder zum Verkleben der Klebemasse mit der Polypropylen-Basisschicht des Liners kommen.

Daher ist auf einer Seite der Kernschicht des erfindungsgemäßen Liners eine Coextrusionsschicht vorgesehen, und zwar insbesondere auf der zum Stanzen vorgesehene Seite des Liners.
Die Coextrusionsschicht ist gemäß einer bevorzugten Ausführungsform der Erfindung zäher als die Kernschicht.

Zum Beispiel für eine gute Planlage der Kernschicht beim Silikonisieren kann auf der anderen Seite der Kernschicht eine weitere Schicht aufgebracht sein, die zusammen mit der Kern- und der Coextrusionsschicht coextrudiert wird.

Die Zähigkeit einer Folie hängt von der Kristallinität der Folie ab, welche durch den Formgebungsprozess, das Reckverhältnis und die Kristallitschmelzpunkte der eingesetzten Polymere beeinflusst wird.
Die Kernschicht besteht vorzugsweise aus einem Polypropylen mit einem Kristallitschmelzpunkt von 150 °C bis 167 °C, weiter vorzugsweise 160 °C bis 167 °C, während die Coextrusionsschicht vorzugsweise ein Polypropylenpolymer oder ethylenhaltiges Copolymer mit einem Kristallitschmelzpunkt von unter 150 °C, vorzugsweise unter 140 °C enthält.
Der Anteil dieser Polymere für die Coextrusionsschicht liegt vorzugsweise bei mindestens 50 Gew.-%.
Beispiele für derartige Polymere sind Polypropylen-Randomcopolymere, Polypropylen-Terpolymere, Polypropylen-Plastomere (zum Beispiel Vistamaxx® oder Versify®), Polyethylen-Plastomere (zum Beispiel Exact® oder Tafmer®, EPM, EPDM, LDPE, VLDPE oder LLDPE).
Enthält das Polymer der Coextrusionsschicht keinen oder einen geringen Anteil an Propylen wird es zur Verbesserung der Haftung zwischen Kernschicht und Coextrusionsschicht vorzugsweise mit einem polypropylenhaltigen Polymer, insbesondere der Hauptkomponente der Basisschicht, abgemischt, vorzugsweise liegt der Anteil bei mindestens 20 Gew.-%.

Der erfindungsgemäße Liner ist auf der außen liegenden Seite der Coextrusionsschicht mit einer Releasebeschichtung (Antihaftbeschichtung) ausgerüstet.
Gemäß einer weiteren vorteilhaften Ausführungsform der Erfindung kann auf beiden außen liegenden Seiten des Trägers je eine Releasebeschichtung aufgebracht sein.
Releasebeschichtungen können aus Silikonen, Acrylaten (zum Beispiel Primal® 205), Stearylverbindungen wie Polyvinylstearylcarbamat oder Chromstearatomplexen (zum Beispiel Quilon® C), Umsetzungsprodukten aus Maleinsäureanhydridcopolymeren und Stearylamin oder Umsetzungsprodukten aus Polyvinylakohol und Stearylisocyanat bestehen.
Bevorzugt wird eine Releasebeschichtung auf Silikonbasis. Das Silikon kann lösungsmittelfrei (100 %ig oder als Dispersion) oder lösungsmittelhaltig aufgetragen werden und durch Strahlen, thermisch zum Beispiel über eine Kondensations-, Additions- oder radikalische Reaktion oder physikalisch (zum Beispiel durch eine Blockstruktur) vernetzt sein.
Gegebenenfalls kann die Releasebeschichtung auch durch Coextrusion aufgetragen sein (zum Beispiel mit einer Außenschicht enthaltend Polyvinylstearylcarbamat oder silikongepfropftes Polyethylen).
Vorzugsweise sind beidseitig auf der Folie des Liners Silikonschichten aufgebracht, welche besonders bevorzugt unterschiedliche Trennkräfte zu einer Klebstoffschicht aufweisen.

Zur Vermeidung von negativen Einflüssen der Releasebeschichtung auf die mechanischen Eigenschaften der Folie werden lösungsmittelfreie Silikone mit thermischer oder strahleninduzierter Vernetzung besonders bevorzugt, insbesondere Vinylpolydimethylsiloxane. Diese werden vorzugsweise mit Methylhydrogensiloxanen in Gegenwart eines Platin- oder Rhodium-Katalysators oder durch EB-/UV-Strahlung vernetzt.

Verwendbar dafür ist zum Beispiel das auf dem Markt erhältliche additionsvernetzende Silikon-Release-System "Dehesive 940A" der Wacker-Chemie mit einem zugehörigen Katalysatorsystem, das im unvernetzten Zustand aufgetragen wird und dann nachträglich im aufgetragenen Zustand vernetzt.

Als vernetzbares Silikon können die üblicherweise zur Trennbeschichtung verwendeten Silikonsysteme eingesetzt werden. Dazu zählen Mischungen aus Vernetzungskatalysatoren und so genannten thermisch härtbaren kondensations- oder additionsvernetzende Siloxanen. Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der EP 0 378 420 A1 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.
Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte Kohlenwasserstoffreste direkt an den Siliciumatomen gebunden aufweisen und in Gegenwart eines Photosensibilisators vernetzt werden (siehe EP 0 168 713 B1, DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.
Beim Einsatz der zum Beispiel in der DE 33 16 166 C1 beschriebenen Organopolysiloxanmassen, die mit Epoxygruppen substituierte Kohlenwasserstoffreste direkt an den Siliciumatomen gebunden aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Thermisch härtende Trennbeschichtungen sind häufig Mehrkomponentensysteme, welche typischerweise aus folgenden Komponenten bestehen:
a) Einem linearen oder verzweigten Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreies, additionsvernetzendes Silikonöl mit endständigen Vinylgruppen, wie DEHESIVE® 921 oder 610, beide kommerziell erhältlich bei Wacker-Chemie GmbH.
b) Einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind.
c) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH.
d) Einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH kommerziell erhältlich ist.

Bei den erfindungsgemäß verwendeten Silikonen, vorzugsweise Silikonölen, handelt es sich um polydisperse Gemische unterschiedlich langer und unterschiedlich substituierter, linearer oder cyclischer Siloxanketten. Die Gemische entstehen in katalysierten Syntheseprozessen. Die Polysiloxane bestehen aus alternierenden Atomen von Silicium und Sauerstoff, so dass das charakteristische Merkmal die Si-O-Si-(= Siloxan-) Bindung im Molekülverband ist. An den beiden freibleibenden Valenzen des Siliciums sind verschiedene Substituenten möglich.
Chemisch korrekt bezeichnet sind die behandelten Silikonöle also Polydimethylsiloxane, die im Allgemeinen als PDMS abgekürzt werden. Sie werden durch nachstehende Formel charakterisiert:

### Struktur von linearen (links) und cyclischen Polydimethylsiloxanen (rechts)

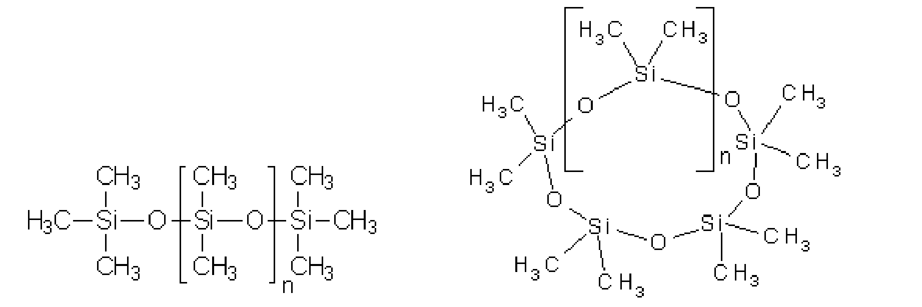

Die Reste am Silicium können auch mit weiteren Siloxanbindungen abgesättigt sein; auf diese Weise kommt man zu verzweigten und vernetzten Silikonen. Erstere bilden dann die Silikonharze, letztere die Silikonelastomere.
Je nach Funktionalität der Siliciumgruppe (mono-, di-, tri- oder tetrafunktionell) hat man die symbolischen Schreibweisen M, D, T und Q eingeführt:
- [M] = R₃SiO_{1/2}
- [D] = R₂SiO_{2/2}
- [T] = RSiO_{3/2}
- [Q] = SiO_{4/2}
   Man kann die folgenden Gruppen unterscheiden:

- lineare Polysiloxane: sind kettenförmig aus difunktionellen Siloxaneinheiten aufgebaut und enthalten monofunktionelle Endgruppen; Bautyp [MDₙM] od. R₃SiO[R₂SiO]ₙ SiR₃,
   im Formelbild (R=CH₃).
- verzweigte Polysiloxane: sind ring- oder kettenförmig aus di-, tri- oder tetrafunktionellen Siloxan-Einheiten aufgebaut; Bautyp [MₙDₘT_{n]}.
- cyclische Polysiloxane: sind ringförmig aus difunktionellen Siloxan-Einheiten aufgebaut; Bautyp [D_{n]}.
- vernetzte Polymere: sind ketten- oder ringförmige Moleküle, die mit Hilfe von T-und Q-Einheiten zu zwei- oder dreidimensionalen Netzwerken verknüpft sind.

Die mit einer Releasebeschichtung zu versehende Folienseite wird zur besseren Haftung der Releasebeschichtung vorzugsweise an der Oberfläche vorbehandelt. Dies können chemische Beschichtungen oder Behandlungen aus der Gasphase (zum Beispiel fluorhaltige Gase) oder physikalische Prozesse wie Flamm- oder Plasma- und insbesondere Coronabehandlung sein.

Aufgrund der hervorragenden Eigenschaften des Liners lässt sich vorteilhaft zur Eindeckung der Klebeschicht eines ein- oder doppelseitig klebenden Klebebands, Klebebandstanzlings oder Etiketts verwenden, insbesondere wenn die Klebeschichtung auf Acrylatbasis ist.

In einer weiteren vorteilhaften Verwendung des Liners deckt dieser ein doppelseitig klebendes Klebeband ein, welches in einem Stanzverfahren zu Stanzlingen verarbeitet wird.

Das ein- oder doppelseitig klebende Klebeband, die Klebebandstanzlinge oder Etiketten. können zusätzlich einen Träger enthalten, zum Beispiel ein Tissue, eine Folie, ein Gewebe, ein Polyolefinschaum oder ein Vlies. Vorzugsweise ist das Klebeband doppelseitig klebend und enthält vorzugsweise einen Träger aus dünnen Papier (Tissue), Vlies, Schaumstoff oder Folie. Die Folien können zum Beispiel biaxial verstrecktes Polyester- oder Polypropylenfolien sein.

Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer, Polyisobutylen oder Silikon geeignet. Bevorzugt sind Acrylathaftkleber, sie können als Dispersion, Hotmelt oder Lösung aufgetragen sein. Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein. Die Klebstoffschicht kann durch Wärme oder energiereiche Strahlen vernetzt sein.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Gerade in der Ausführungsform des Liners mit einer gefärbten Folie kommen die Vorteile der Erfindung zur Geltung. Die Farbe braucht nicht über einen Beschichtungsprozess aufgebracht zu werden, sondern durch die Coextrusion der Schichten wird dieser zusätzliche Arbeitsgang und die Verwendung von Lösungsmitteln vermieden. Weiterhin können verschiedene Klebebänder oder andere Produkte durch die Farbe des Liners gekennzeichnet werden, was Verwechselung bei der Applikation der Klebebänder vermeidet.
Farbige Liner begünstigen die Steuerung des Stanzvorganges (zum Beispiel die Bahnkantensteuerung).

Alle erwähnten Parameter werden nach folgenden Prüfmethoden bestimmt:
Dicke: DIN 53370
Zugfestigkeit: DIN 53455-7-5 in Längsrichtung
Spannung 1%- beziehungsweise 10 %-Dehnung: DIN 53455-7-5 in Längsrichtung
Bruchdehnung: DIN 53455-7-5 in Längsrichtung
Schmelzindex: DIN 53735
   • Der Schmelzindex "Melt Flow Ratio" (MFR) wird gemäß DIN 53735 gemessen. Für Polyethylene werden Schmelzindices meistens angegeben in g/10 min bei 190 °C und einem Gewicht von 2,16 kg, für Polypropylene entsprechend, allerdings bei einer Temperatur von 230 °C.
Biegemodul (Flexural Modulus) ASTM D 790 A
Dichte: ASTM D 792
Kristallitschmelzpunkt: Bestimmung durch DSC nach ISO 3146 oder MTM 15902 (Basell-Methode)

Im Folgenden soll die Erfindung anhand von Beispielen erläutert werden, ohne diese dadurch einzuschränken.

### Beispiele

### Rohstoffe:

Dow 7C06:
PP-BC, MFI 1,5 g/10 min, nicht nucleiert, Biegemodul 1280 MPa, Kristallitschmelzpunkt 164 °C (Dow Chemical)

Dow Inspire 404.01:
Polypropylen, MFI 3 g/10 min, Biegemodul 2068 MPa, nucleiert (mit einem polymeren Nucleierungsmittels entsprechend der US 2003/195300 A1), Kristallitschmelzpunkt 164 °C (Dow Chemical)

Moplen HP 501 D:
Copolymer mit 1,5 Gew.- % Ethylen, MFI 0,7 g/10 min, nicht nucleiert, Biegemodul 1450 MPa, Kristallitschmelzpunkt 161 °C (Basell)

Borseal TD115BF:
Polypropylenterpolymer mit Ethylen und Butylen, MFI 6,5 g/10 min, Kristallitschmelzpunkt 130 °C, Biegemodul 700 MPa (Boralis)

Vistamaxx 3000:
Polyolefin Elastomer, MFI 3g/10 min, Kristallitschmelzpunkt 40 °C, Biegemodul 40,2 MPa (Exxon Mobil Chemical)

ADK STAB NA-11 UH:
Nucleierungsmittel (Adeka Palamarole)

Remafingelb HG AE 30:
PP-Farbmasterbatch mit transluzentem Pigment (Clariant Masterbatches)

TPM 1005 E5:
weißes PE-Farbmasterbatch, enthält 50 Gew.-% TiO₂ (Techmer Polymer Modifiers)

Dehesive 914:
Vinylpolydimethylsiloxan (Wacker Silicones)

Dehesive 920:
Vinylpolydimethylsiloxan (Wacker Silicones)

CRA 17:
Controlled Release Additiv (Wacker Silicones)

Crosslinker V24:
Methylhydrogenpolysiloxan (Wacker Silicones)

Catalyst OL:
Platin-Katalysator in Polydimethylsiloxan (Wacker Silicones)

### Beispiel 1

Eine dreischichtige Folie wird auf einer Einschneckencoextrusionsanlage mit Flachdüse mit flexibler Düsenlippe in einer Schicht hergestellt, gefolgt von Chillrollstation und einer einstufigen Kurzspaltreckanlage.
Die 65 µm starke Kernschicht besteht aus Dow 7C06 und die beiden äußeren, je 5 µm dicken Schichten aus 68,5 Gew.-% ADK STAB NA-11 UH, 30 Gew.-% Dow 7C06 und 1,5 Gew.-% TPM 1005 E5. Die Düsentemperatur beträgt 235 °C und das Reckverhältnis 1:6,1.
Die erhaltene Folie ist weiß.

| | |
|---|---|
| Folieneigenschaften: | |
| Dicke | 75 µm |
| spez. max. Kraft | 200 N/ cm |
| spez. Kraft bei 1 %-Dehnung | 22 N/cm |
| spez. Kraft bei 10 %-Dehnung | 140 N/ cm |
| Bruchdehnung | 19 % |

Die Folie wird beidseitig coronavorbehandelt und mit einem Mehrfachwalzenauftragswerk auf jeder Seite mit einer anderen Releasebeschichtung versehen, welche jeweils anschließend in einem Wärmekanal ausgehärtet werden. Dadurch weist der Liner eine abgestufte Trennwirkung auf.

Die Releaseschichten bestehen aus
100 Gew.-Teilen Dehesive 920
2,5 Gew.-Teilen Vernetzer V24 und
2,5 Gew.-Teilen Katalysator OL (Easy Release, leicht trennend)
und
50 Gew.-Teilen Dehesive 920,
50 Gew.-Teilen CRA 17,
4 Gew.-Teilen Vernetzer V24 und
1,0 Gew.-Teil Katalysator OL (Tight Release, schwerer trennend)

Dieser Liner wird mit einem Acrylathotmeltklebstoff gemäß dem Beispiel 6 der DE 101 45 229 A1 auf der schwerer trennenden Silikonseite beschichtet, der Masseauftrag beträgt 100 g/m², anschließend wird eine coronavorbehandelte 12 µm dicke Polyesterfolie einkaschiert und zur Rolle gewickelt. In einem zweiten Arbeitsgang wird dieses Vormaterial abgewickelt und analog erneut beschichtet, diesmal jedoch auf der unbeschichteten Polyesterseite, dann zur Mutterrolle gewickelt und geschnitten.

Aus diesem Produkt werden quadratische Stanzlinge von 20 mm Kantenlänge hergestellt, die Breite der Stege des Gitters beträgt 5 mm. Das Gitter wird abgezogen, und das Produkt nach Eindecken eines Abdeckliners SILPHAN M23 M74F (Siliconature) als Schutzabdeckung für die Oberfläche der Stanzlinge aufgewickelt. Im Spendegerät werden die Stanzlinge nach Abziehen des Abdeckliners ohne Störungen vom Liner auf Kunststoffteile übertragen ("pick&place"). Wird die Eindringtiefe des Stanzmessers um weitere 3 µm erhöht, spleißt der Liner nicht.

### Beispiel 2

Eine dreischichtige Folie wird unter Bedingungen wie im Beispiel 1 hergestellt, wobei das Reckverhältnis bei 1:8 eingestellt und die Schichtdickenverhältnisse geändert werden. Als Rohstoffe für die Hauptschicht wird eine Mischung aus 98,9 Gew.-% Moplen HP 501 D, 0,9 Gew.-% Remafingelb HG AE 30 und 0,2 Gew.-% ADK STAB NA-11 UH verwendet. Die Coextrusionsschichten bestehen aus Borseal TD115BF.
Die Folie ist gelb transparent.

| | |
|---|---|
| Folieneigenschaften: | |
| Gesamtdicke | 50 µm |
| Dicke der Hauptschicht | 45 µm |
| Dicke der Coextrusionsschichten je | 2,5 µm |
| spez. Kraft bei 1 %-Dehnung | 22 N/cm |
| spez. Kraft bei 10 %-Dehnung | 40 N/cm |
| spez. max. Kraft | 160 N/cm |
| Bruchdehnung | 12 % |

Die Folie wird beidseitig coronavorbehandelt und wie in Beispiel 1 beidseitig silikonisiert. Dieser Liner wird mit Aroset PS 1874 (Acrylat-Lösungsmittelmasse von Ashland) auf der schwerer trennenden Silikonseite beschichtet (Masseauftrag 50 g/m² trocken), anschließend wird TLG 0700.8 (800 µm PE-Schaum von Sekisui-Alveo) einkaschiert und zur Rolle gewickelt. In einem zweiten Arbeitsgang wird dieses Vormaterial abgewickelt und analog erneut beschichtet, diesmal jedoch auf der unbeschichteten Schaumstoffseite, dann zur Mutterrolle gewickelt und geschnitten.

Die Weiterverarbeitung erfolgt wie in Beispiel 1. Es treten keine Verarbeitungsprobleme auf.

### Beispiel 3

Eine zweischichtige Folie wird unter Bedingungen wie Beispiel 1 hergestellt, wobei das Reckverhältnis bei 1:7 eingestellt und die Schichtdickenverhältnisse geändert werden. Die Hauptschicht besteht aus Inspire D 404.01, und die Coextrusionsschicht besteht aus Vistamaxx 3000.
Die Folie ist farblos.

| | |
|---|---|
| Folieneigenschaften: | |
| Gesamtdicke | 50 µm |
| Dicke der Hauptschicht | 45 µm |
| Dicke der Coextrusionsschicht | 5 µm |
| spez. Kraft bei 1 % Dehnung | 28,7 N/cm |
| spez. max. Kraft | 145 N/cm |
| Bruchdehnung | 9,5 % |

Die Folie wird auf der Seite der Coextrusionsschicht mit Corona vorbehandelt, und auf dieser Seite mit einem Mehrfachwalzenauftragswerk mit einem Silikontrennlack versehen und in einem Kanal ausgehärtet. Der Silikontrennlack besteht aus einer Mischung aus 96,5 Gew.-Teilen Dehesive 914, 2,5 Gew.-Teilen Crosslinker V24 und 1 Gew.-Teil Catalyst OL.

Der erhaltene Liner wird auf der silikonsierten Seite mit einem Streichbalken mit einem Klebstoff mit 40 g/m² (trocken) beschichtet. Dieser enthält 40 Gew.-% Naturkautschuk SMRL (Mooney 70), 10 Gew.-% Titandioxid, 37 Gew.-% eines C₅-Kohlenwasserstoffharzes mit einem R&B-Wert von 95 °C und 1 Gew.-% Antioxidant Vulkanox® BKF und liegt als 20 Gew.-%ige Lösung in Hexan vor.
Nach der Trocknung bei 115 °C wird weißes Etikettenpapier von 70 g/m² Flächengewicht einkaschiert, und das erhaltene Etikettenvormaterial zur Mutterrolle gewickelt. Aus diesem Material werden Etiketten von 20 mm Größe analog Beispiel 1 jedoch unter Anpassung auf die neue Foliendicke hergestellt, es treten keine Verarbeitungsprobleme auf.

### Vergleichsbeispiel 1

Eine Folie wird auf einer Einschneckenextrusionsanlage mit Flachdüse mit flexibler Düsenlippe aus Inspire D 404.01 extrudiert, gefolgt von Chillrollstation und einer einstufigen Kurzspaltreckanlage. Die Düsentemperatur beträgt 235 °C. Das Reckverhältnis beträgt 1:10.

| | |
|---|---|
| Folieneigenschaften: | |
| Dicke | 68 µm |
| spez. Kraft bei 1 % Dehnung | 50 N/cm |
| spez. max. Kraft | 210 N/cm |
| Bruchdehnung | 5,7 % |

Die weiteren Arbeitsschritte erfolgen wie in Beispiel 1. Das Stanzgitter lässt sich bei der alten Einstellung des Werkzeugs von Beispiel 1 nicht abziehen, ohne dass die quadratischen Stanzlinge mit abgezogen werden. Die Stanze wurde also zur Anpassung an die geringere Foliendicke angepasst, damit das Werkzeug 7 µm tiefer eindringt. Das Stanzgitter lässt sich entfernen. Beim Spenden der Stanzlinge bleiben einige auf dem Liner zurück. Nach Lagerung lassen sich fast alle Stanzlinge nicht spenden. Wird die Eindringtiefe des Stanzmessers um weitere 3 µm erhöht, spleißt der Liner. (Es treten Risse in Längsrichtung auf).

### Vergleichsbeispiel 2

Die Herstellung des Liners erfolgt durch Silikonisierung gemäß Beispiel 1 jedoch auf einer handelsüblichen 35 µm dicken biaxial verstreckten Polypropylenfolie. Das Verstreckverhältnis in Maschinenrichtung beträgt 1:5 und das Verstreckverhältnis quer zur Maschinenrichtung 1:9.

| | |
|---|---|
| Folieneigenschaften: | |
| Dicke | 35 µm |
| spez. Kraft bei 1 % Dehnung in Maschinenrichtung | 8 N/cm |
| spez. max. Kraft in Maschinenrichtung | 40 N/cm |
| Bruchdehnung in Maschinenrichtung | 215 % |

Die Weiterverarbeitung erfolgt gemäß Beispiel 2. Die Stanze wird auf die neue Foliendicke umgestellt. Der Liner ist farblos. Beim Entgittern reißt der Liner ständig, da BOPP-Folie einen extrem niedrigen Weiterreißwiderstand aufweist.

### Vergleichsbeispiel 3

Eine dreischichtige Folie wird anlag zu Beispiel 1 hergestellt, wobei das Reckverhältnis bei 1:8 eingestellt wurde. Als Rohstoffe für die Hauptschicht wird eine Mischung aus 98,9 Gew.-Teilen Moplen HP 501 D, 0,9 Gew.-Teilen Remafingelb HG AE 30 und 0,2 Gew.-Teilen ADK STAB NA-11 UH verwendet. Die Coextrusionsschichten bestehen aus Dow 7C06.

| | |
|---|---|
| Folieneigenschaften: | |
| Gesamtdicke | 64 µm |
| Dicke der Hauptschicht | 60 µm |
| Dicke der Coextrusionsschichten je | 2,5 µm |
| spez. Kraft bei 1 %-Dehnung | 21 N/cm |
| spez. Kraft bei 10 %-Dehnung | 154 N/cm |
| spez. max. Kraft | 180 N/cm |
| Bruchdehnung | 17 % |

Der Liner ist transparent gelb. Beim Stanzen treten die unter Vergleichsbeispiel 1 beschriebenen Probleme auf.

### Vergleichsbeispiel 4

Eine Trennfolie auf Basis einer unverstreckten Polypropylenfolie (76677 easy tight Farbe 94333 von Huhtamaki) wird entsprechend dem Beispiel 1 als Liner eingesetzt. Beim Maschinenhalt reißt der Liner an der Beschichtungsdüse für den Hotmelt. Bei Stanzen wird der Liner teilweise so verdehnt, dass die Maße der Stanzlinge vom Soll abwichen. Beim Spenden führt die Überdehnung dazu, dass sich ein Teil der Stanzlinge schon vor der Spendekante vom Liner ablösen und an Umlenkrollen festkleben.

| | |
|---|---|
| Folieneigenschaften: | |
| Trägerdicke | 100 µm |
| spez. Kraft bei 1 %-Dehnung | 12 N/cm |
| spez. Kraft bei 10 %-Dehnung | 29 N/cm |
| spez. max. Kraft | 51 N/cm |
| Bruchdehnung | 800 % |

## Patentansprüche

1. Liner aus einer monoaxial verstreckten Folie, die aus mindestens zwei miteinander coextrudierten Schichten besteht, einer Kernschicht aus Polypropylen, einer Coextrusionsschicht sowie gegebenenfalls weiteren Schichten, wobei auf der außen liegenden Seite der Coextrusionsschicht eine Releasebeschichtung aufgebracht ist.

2. Liner nach Anspruch 1,
**dadurch gekennzeichnet, dass**
die Dicke 45 bis 55 µm oder 70 bis 80 µm beträgt.

3. Liner nach Anspruch 1 oder 2,
**dadurch gekennzeichnet, dass**
die Folie
• ein Reckverhältnis zwischen 1:5 und 1:10, insbesondere zwischen 1:6 und 1:9,
• in Längsrichtung eine spezifische Kraft bei 1 %-Dehnung von mindestens 15, vorzugsweise mindestens 20 N/cm und/oder
• eine spezifische Kraft bei 10 %-Dehnung von mindestens 100, vorzugsweise mindestens 130 N/cm aufweist.

4. Liner nach zumindest einem der Ansprüche 1 bis 3,
**dadurch gekennzeichnet, dass**
auf beiden außen liegenden Seiten des Trägers je eine Releasebeschichtung aufgebracht ist, wobei die Releasebeschichtungen vorzugsweise unterschiedliche Trennkräfte zu einer Klebstoffschicht aufweisen.

5. Liner nach zumindest einem der vorherigen Ansprüche,
**dadurch gekennzeichnet, dass**
das Polypropylen der Kernschicht ein Homopolymer oder ein schlagzähmodifiziertes
Polypropylencopolymer ist.

6. Liner nach zumindest einem der vorherigen Ansprüche,
**dadurch gekennzeichnet, dass**
das Polypropylen der Kernschicht einen Biegemodul von 1100 bis 1600, vorzugsweise 1200 bis 1400 MPa und/oder einen Kristallitschmelzpunkt von 150 °C bis 167 °C, vorzugsweise 160 °C bis 167 °C aufweist.

7. Liner nach zumindest einem der vorherigen Ansprüche,
**dadurch gekennzeichnet, dass**
die Kernschicht weiß oder farbig ist.

8. Liner nach zumindest einem der vorherigen Ansprüche,
**dadurch gekennzeichnet, dass**
die Coextrusionsschicht ein Polypropylenpolymer oder ein ethylenhaltiges Polymer mit einem Kristallitschmelzpunkt von unter 150 °C, vorzugsweise unter 140 °C enthält, vorzugsweise zu mindestens 50 Gew.-%.

9. Liner nach zumindest einem der vorherigen Ansprüche,
**dadurch gekennzeichnet, dass**
die Releasebeschichtung eine Silikonschicht ist, die vorzugsweise Vinylpolydimethylsiloxan enthält.

10. Verwendung eines Liners nach zumindest einem der vorherigen Ansprüche zur Eindeckung der Klebeschicht eines ein- oder doppelseitig klebenden Klebebands, Klebebandstanzlings oder Etiketts.

11. Verwendung eines Liners nach Anspruch 10,
**dadurch gekennzeichnet, dass**
die Klebeschichtung auf Acrylatbasis ist.

12. Verwendung eines Liners nach zumindest einem der vorherigen Ansprüche, der ein doppelseitig klebendes Klebeband eindeckt, das in einem Stanzverfahren verarbeitet wird.
